**Europäisches Patentamt**

**European Patent Office**

**Office européen des brevets**

(19)

(11) Veröffentlichungsnummer: **0 070 323**
A1

# (12) EUROPÄISCHE PATENTANMELDUNG

(21) Anmeldenummer: **81105593.8**

(22) Anmeldetag: **16.07.81**

(51) Int. Cl.³: **G 01 D 13/12,** G 01 B 3/00

(43) Veröffentlichungstag der Anmeldung: **26.01.83**
**Patentblatt 83/4**

(84) Benannte Vertragsstaaten: **BE DE FR GB IT**

(71) Anmelder: **Steiger, Emile, Pre-de L'etang,**
**CH-1807 Blonay (CH)**

(72) Erfinder: **Steiger, Emile, Pre-de L'etang, CH-1807 Blonay**
**(CH)**

(74) Vertreter: **Arato, Laszlo, Seebuchtstrasse 19,**
**CH-6374 Buochs (CH)**

(54) **Verfahren zur Herstellung von Kreisteilungen.**

(57) Zur Herstellung von Kreisteilungen wird vorgeschlagen, daß die Teilungsmarkierungen von einem Mutterkreis (12) auf ein sich kontinuierlich und synchron zum
Mutterkreis drehendes, mit einer fotoempfindlichen Schicht
versehenes Werkstück (2) übertragen werden, wobei über
ein Lesegerät (24, 26) eine gesteuerte Blitzfolge einer Blitzlampe (40) die Schicht belichtet und das Werkstück aufgrund
dieser Belichtung mit Markierungen versehen wird. Dadurch ist es möglich, hochpräzise Kreisteilungen einfach
und schnell auszuführen.

- I -

## Verfahren zur Herstellung von Kreisteilungen

Die Erfindung betrifft ein Verfahren zur Herstellung von Kreisteilungen, wobei die Teilungsmarkierungen von einem Mutterkreis auf ein Werkstück übertragen werden. Bei bekannten Verfahren erfolgt die Uebertragung der Markierungen auf das Werkstück mittels mechanisch wirkenden Geräten, so dass der Aufwand an hochpräzisen mechanischen Einrichtungen bei einer verhältnismässig geringen Arbeitsgeschwindigkeit gross ist.

Der vorliegenden Erfindung liegt die Aufgabe zugrunde, ein Verfahren der genannten Art zu finden, das die Herstellung hochpräziser Kreisteilungen innerhalb kurzer Zeit ermöglicht, das einfach ausführbar ist und sich auch gut für die automatische Arbeitsweise eignet. Diese Aufgabe wird gelöst durch ein Verfahren, das dadurch gekennzeichnet ist, dass der Mutterkreis und das Werkstück in kontinuierlicher Bewegung um eine gemeinsame Achse synchron gedreht werden, auf dem Mutterkreis vorhandene Teilungsmarkierungen über mindestens ein Lesegerät in Steuerimpulse umgesetzt werden, durch die die Blitzfolge einer Blitzlampe gesteuert wird, das Licht der Blitzlampe durch eine Markierungsblende geführt wird, so dass das die Blende passierende Blitzlicht entsprechend der Teilung des Mutterkreises das zuvor mit einer lichtempfindlichen Schicht versehene Werkstück in Form der Blendenöffnung der Markierungsblende belichtet und aufgrund dieser Belichtung das Werkstück mit Markierungen versehen wird.

Für die Ausführung dieses Verfahrens wird weiterhin eine Vorrichtung vorgeschlagen, die gekennzeichnet ist durch einen drehbar gelagerten Mutterkreisträger, mindestens einen drehbar gelagerten Werkstückträger, die beide zueinander synchron und mit kontinuierlicher Bewegung antreibbar sind, mindestens ein Lesegerät für die Teilungsmarkierungen des Mutterkreises, eine Einrichtung zur Erzeugung von Lichtblitzen, eine mit dem Lesegerät verbundene Steuerung für die Zeitfolge der Lichtblitze und eine zwischen der Lichtblitzquelle und dem Werkstückträger angeordnete feststehende Markierungsblende.

In vorteilhafter Ausführungsform des Verfahrens kann durch
die mittels des Lesegerätes erzeugten Steuerimpulse weiterhin auch über einen Schrittmotor die schrittweise Bewegung
einer drehbar gelagerten Scheibe gesteuert werden, deren
Umfangsbereich sich in der für den Lichtstrahl der Blitzlampe vorgesehenen Bahn befindet, wobei im Umfangsbereich
der Scheibe Rasterausschnitte und/oder Ausschnitte in der
Form von alphanumerischen Zeichen vorgesehen sind.

Eine besonders scharfe Abbildung der Markierungen, entsprechend der Form der Blendenöffnung und/oder der Ausschnitte der drehbaren Scheibe, kann dadurch erreicht werden, dass das die Blendenöffnung und/oder die Ausschnitte
passierende Blitzlicht durch ein Verkleinerungsobjektiv
geführt wird.

Weitere vorteilhafte Ausführungsformen der Erfindung ergeben sich aus der folgenden Beschreibung eines Ausführungsbeispieles anhand der Zeichnung. Es zeigt:

Fig. 1    eine schematische Darstellung einer Vorrichtung
          zur Durchführung des Verfahrens und

Fig. 2    eine vergrösserte Aufsicht auf einen Teil des Umfangs der drehbar gelagerten Scheibe mit der in
          Richtung des Lichtstrahles darunterliegenden Blende.

Das mit einer Kreisteilung zu versehende Werkstück 2 wird
auf einem Werkstückträger 4 befestigt, der sich am oberen
Ende einer in einem Lager 6 vertikal gelagerten Welle 8 befindet. An der gleichen Welle 8 ist ein horizontaler Drehteller 10 zentrisch befestigt, der an seinem zylindrischen
Umfang einen bandförmigen Mutterkreisträger 12 trägt. Der
Mutterkreisträger lässt sich für die Herstellung verschiedener Kreisteilungen gegen einen anderen austauschen. An
der Unterseite des Drehtellers ist ein Schaltnocken 14 für
die Betätigung eines Endschalters 16 vorgesehen, der den
Antriebsmotor 18 für die kontinuierliche Drehbewegung des
Werkstückträgers gemeinsam mit dem Drehteller 10 nach einer
vollständigen Umdrehung abschaltet. Die Antriebsübertragung
von dem Motor 18 auf die Welle 8 erfolgt durch den Kontakt
eines vom Motor angetriebenen Reibrades 20 mit einem überstehenden Rand 22 des Drehtellers 10.

Auf die zylindrische, den Mutterkreisträger 12 tragende
Umfangsfläche des Drehtellers 10 ist senkrecht die Optik
von zwei elektrooptischen Lesegeräten 24, 26 gerichtet,
die in der Zeichnung schematisch angedeutet sind. Die Aufgabe dieser Lesegeräte bekannter Ausführung besteht darin,
bei jeder Vorbeibewegung einer Teilungsmarkierung 28 bzw.
30 ein Steuersignal zu erzeugen, das von einem Steuergerät
32, 34, 36, 38 für die Steuerung der Blitzfolge einer Blitzröhre 40 und/oder für die Steuerung eines Schrittmotors 42 verarbeitet wird. Diese Signalerzeugung des Lesegerätes kann mittels einer Fotozelle erfolgen, durch die die Reflexionsschwankungen beim Durchlauf einer Markierung aufgenommen werden, die sich bei der Bestrahlung eines bestimmten Punktes des Mutterkreisträgers durch eine Lichtquelle ergeben.

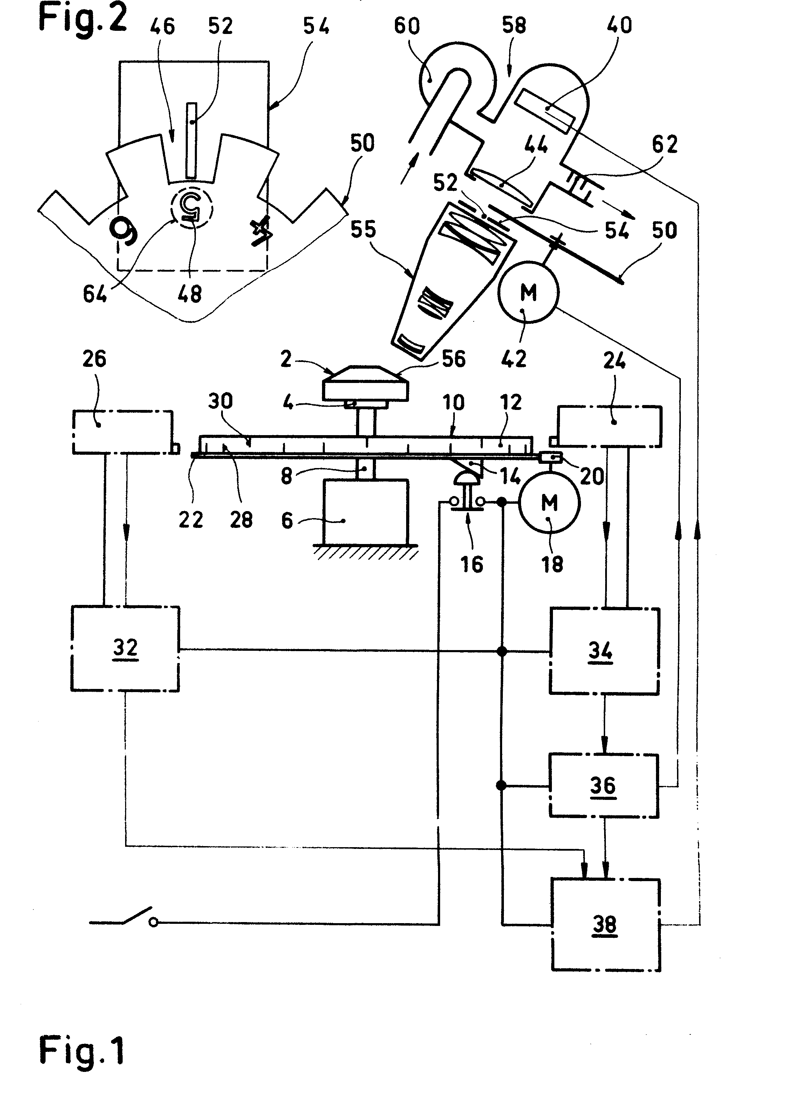

Das Licht der Blitzröhre 40 wird beispielsweise durch einen Kondensor 44 geführt und gelangt anschliessend durch Ausschnitte 46, 48 (Fig. 2) einer entsprechend den Teilungsmarkierungen 30 stufenweise durch den Schrittmotor 42 drehbaren Scheibe 50 und durch die z.B. schlitzförmige Markierungsöffnung 52 einer feststehend angeordneten Blende 54. Mit der den Abbildungen dieser Ausschnitte entsprechenden Bündelung wird das Licht der Blitzlampe durch ein Verkleinerungsobjektiv 55 geführt, beispielsweise mit einem Verkleinerungsverhältnis von 1 : 5, so dass beim Auftreffen auf das Werkstück 2 eine scharfumgrenzte Belichtung entsteht. Diese kurzzeitige Belichtung wird anschliessend durch fotochemisches Verfahren auf dem Werkstück dargestellt. Hierfür wird das Werkstück 2 in dem mit Teilungsmarkierungen und zugehörigen alphanumerischen Zeichen zu versehenden Bereich 56 mit einer lichtempfindlichen Schicht überzogen. Es versteht sich somit, dass die Markierung des Werkstückes im Dunkeln bzw. bei Dunkelkammerbeleuchtung auszuführen ist. Ein Austritt von störendem Licht aus der Projektionsapparatur 58 trotz der Kühlung mittels eines Gebläses 60 wird
mittels einer Luftschleuse 62 verhindert.

Die gesamte Projektionsapparatur 58 ist mittels einer
nichtdargestellten Einrichtung gegenüber dem Werkstück 2
bzw. dem Werkstückträger verstellbar, so dass zylindrische,
ebene oder konische Ringflächen 56 des Werkstückes mit den
Teilungsmarkierungen versehen werden können.

Die Arbeitsgesc'windigkeit der Vorrichtung ist verhältnismässig gross und im wesentlichen nur von der Leistungsfähigkeit der Blitzlampe bzw. deren möglichen Blitzfolge
abhängig, die beispielsweise 1 bis 2 Sekunden beträgt. Die
Blitzdauer kann wesentlich weniger als 1/100 sec. bei einer
Leistung von bis zu 2000 Ws betragen.

Die Genauigkeit der Teilungen ist von dem Grössenverhältnis
zwischen dem Durchmesser des Werkstückes 2 und dem Durchmesser des Drehtellers 10 bzw. des Mutterkreisträgers 12
abhängig, so dass sich durch die erfindungsgemässe Vorrichtung eine hohe Genauigkeit erzielen lässt.

Nicht nur der Mutterkreis sondern auch die Träger der Markierungsbilder d.h. die Blende 52 oder die Scheibe 50 lassen
sich einfach austauschen. Es können auch mehrere Blenden 52
oder Scheiben 50 übereinander angeordnet sein, die durch
verschiedene Lesegeräte 24, 26 gesteuert werden. Im vorliegenden Beispiel werden abwechslungsweise lange und kurze
Teilungsstriche auf das Werkstück projiziert. Bei der Ueberdeckungsposition zwischen der Blende 54 und der Scheibe 50, entsprechend der Darstellung in Fig. 2, wird ein Teilungsstrich projiziert, der im entsprechenden Verkleinerungsverhältnis des Objektives 55, die Grösse bzw. Form der schlitzförmigen Blendenöffnung 52 aufweist, da sich die Blendenöffnung 52 in einem Ausschnitt 46 der Scheibe 50 befindet. Gleichzeitig wird die Ziffer "5" durch den entsprechend dieser Ziffer in der Scheibe 50 geformten Ausschnitt 48 projiziert, indem sich in der Blende 54 unterhalb dieser Ziffer eine Oeffnung 64 befindet, die in Fig. 2 durch Strichlinien dargestellt ist. Ueber das auf die oberen Markierungen 30 ansprechende Lesegerät 24 wird mittels des Schrittmotors 42 die Scheibe 50 um eine Position weitergedreht, so dass der Scheibenumfang einen Teil der schlitzförmigen Blendenöffnung 52 überdeckt und nur ein entsprechend kürzerer Teilungsstrich projiziert werden kann. Gleichzeitig hat sich die Ziffer "5" weiterbewegt, so dass in dieser neuen Position der Scheibe 50 keine Ziffer projiziert wird. Diese zweite Position der Scheibe 50 und damit die Projektion kurzer Teilungsstriche wird solange eingehalten, bis eine nächste Markierung 30 des Mutterkreisträgers 12 während der Drehung des Werkstückes 2 das Lesegerät 24 erreicht hat. In dieser zweiten Position der Scheibe 50 kann eine unterschiedliche Anzahl von kurzen Teilungsstrichen projiziert werden, entsprechend der Anzahl der zwischen den Markierungen 30 auf dem Mutterkreisträger vorgesehenen Markierungen 28 für die Steuerung der Blitzfolge.

Es versteht sich, dass es für die Ausführung des erfindungsgemässen Verfahrens nicht notwendige Voraussetzung ist, dass der Werkstückträger 4 und der Drehteller 10 mit dem Mutterkreisträger 12 auf der gleichen Welle 8 angeordnet sind, sondern es genügt, wenn beide ortsgetrennt zueinander synchron angetrieben werden. Auf diese Weise ist es auch möglich, einem Mutterkreisträger bzw. der Steuereinrichtung mehrere Werkstückträger 4 mit Projektionsapparaturen 58 zuzuordnen.

Die erfindungsgemässe Vorrichtung eignet sich durch ihren einfachen Aufbau und ihre elektronische Steuerung besonders gut auch für eine automatische Fertigung.

Patentansprüche

1.  Verfahren zur Herstellung von Kreisteilungen, wobei
    die Teilungsmarkierungen von einem Mutterkreis auf
    ein Werkstück übertragen werden, dadurch gekennzeichnet, dass der Mutterkreis und das Werkstück in kontinuierlicher Bewegung um eine Achse synchron gedreht
    werden, auf dem Mutterkreis vorhandene Teilungsmarkierungen über mindestens ein Lesegerät in Steuerimpulse umgesetzt werden, durch die die Blitzfolge einer
    Blitzlampe gesteuert wird, das 'icht der Blitzlampe
    durch eine Markierungsblende geführt wird, so dass das
    die Blende passierende Blitzlicht entsprechend der
    Teilung des Mutterkreises das zuvor mit einer fotoempfindlichen Schicht versehene Werkstück in Form der
    Blendenöffnung der Markierungsblende belichtet und
    aufgrund dieser Belichtung das Werkstück mit Markierun-
    gen versehen wird.

2. Verfahren nach Anspruch 1, dadurch gekennzeichnet, dass durch die mittels des Lesegerätes erzeugten Steuerimpulse über einen Schrittmotor die schrittweise Bewegung einer drehbar gelagerten Scheibe gesteuert wird, deren Umfangsbereich sich in der für den Lichtstrahl der Blitzlampe vorgesehenen Bahn befindet, wobei im Umfangsbereich der Scheibe Rasterausschnitte und/oder Ausschnitte in der Form alphanumerischer Zeichen vorgesehen sind.

3. Verfahren nach Anspruch 1 oder Anspruch 2, dadurch gekennzeichnet, dass das die Blendenöffnung und/oder die Ausschnitte in Form alphanumerischer Zeichen passierende Blitzlicht durch ein Verkleinerungsobjektiv geführt wird.

4. Verfahren nach Anspruch 1, dadurch gekennzeichnet, dass der Mutterkreis durch Befestigen eines Markierungen aufweisenden Bandes am Umfang einer Scheibe gebildet wird, die um eine Achse drehbar ist, die gleichsachsig zur Drehachse des Werkstückes verläuft.

5. Vorrichtung zur Ausführung des Verfahrens nach Anspruch 1, gekennzeichnet durch einen drehbar gelagerten Mutterkreisträger, mindestens einen drehbar gelagerten Werkstückträger, die beide zueinander synchron und mit kontinuierlicher Bewegung antreibbar sind, mindestens ein Lesegerät für die Teilungsmarkierungen des Mutterkreises, eine Einrichtung zur Erzeugung von Lichtblitzen, eine mit dem Lesegerät verbundene Steuerung für die Zeitfolge der Lichtblitze und eine zwischen der Lichtblitzquelle und dem Werkstückträger angeordnete feststehende Markierungsblende.

6. Vorrichtung nach Anspruch 5, gekennzeichnet durch eine drehbar gelagerte Scheibe, deren Umfangsbereich sich zwischen der Lichtblitzquelle und dem Werkstückträger befindet und einen die Scheibe antreibenden Schrittmotor, der mit einer Steuerung verbunden ist, an deren Eingang das Lesegerät angeschlossen ist, wobei sich im Umfangsbereich der Scheibe Rasterausschnitte und/oder Ausschnitte in Form von alphanumerischen Zeichen befinden.

7. Vorrichtung nach Anspruch 5, dadurch gekennzeichnet, dass zwischen der feststehenden Markierungsblende und/oder einem stufenweise drehbeweglichen Markierungsträger und dem Werkstückträger ein Verkleinerungsobjektiv angeordnet ist.

8. Vorrichtung nach einem der Ansprüche 5 bis 7, dadurch gekennzeichnet, dass die Einrichtung zur Erzeugung von Lichtblitzen zur Anpassung an die Anordnung einer zu markierenden Oberfläche eines Werkstückes relativ zu dem Werkstückträger winkelverstellbar ist.

Fig.2

Fig.1

0070323

Europäisches
Patentamt

**EUROPÄISCHER RECHERCHENBERICHT**

0070323
Nummer der Anmeldung

EP 81 10 5593.8

| | **EINSCHLÄGIGE DOKUMENTE** | | **KLASSIFIKATION DER ANMELDUNG (Int. Cl.³)** |
|---|---|---|---|
| Kategorie | Kennzeichnung des Dokuments mit Angabe, soweit erforderlich, der maßgeblichen Teile | betrifft Anspruch | |
| P | AT - B - 357 778 (H. LEITNER) <br> * Ansprüche * <br> -- <br> DE - B - 1 210 577 (NATIONAL RESEARCH DEVELOPMENT CORP.) <br> * Ansprüche 1, 10 * <br> ---- | 1,5 <br><br><br> 7 | G 01 D 13/12 <br> G 01 B 3/00 |

**RECHERCHIERTE SACHGEBIETE (Int. Cl.³)**

G 01 B 3/00
G 01 D 13/12

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 02-12-1981 | KÖHN |

EPA form 1503.1 06.78